# EUROPÄISCHE PATENTSCHRIFT

(11) **EP 2 516 848 B1**
(45) Veröffentlichungstag und Bekanntmachung des Hinweises auf die Patenterteilung: **22.02.2017**
(21) Anmeldenummer: 10810737.6
(22) Anmeldetag: 19.12.2010
(51) Int. Cl.: F03D 5/04, F03D 3/06

(54) **VORRICHTUNG ZUR NUTZUNG VON STRÖMUNGSENERGIE**
DEVICE FOR USING FLOW ENERGY
DISPOSITIF POUR EXPLOITER DE L'ÉNERGIE DE FLUX

(30) Priorität: 22.12.2009 DE 102009060437
(43) Veröffentlichungstag der Anmeldung: 31.10.2012
(73) Patentinhaber: itea ecotech GmbH, 60313 Frankfurt/Main (DE)
(72) Erfinder: KELAIDITIS, Alexis, 66386 St. Ingbert (DE); KELAIDITIS, Nikolas, 60486 Frankfurt a.M. (DE); KELAIDITIS, Konstantin, 66386 St. ingbert (DE)
(74) Vertreter: Bernhardt, Reinhold
(86) Internationale Anmeldenummer: PCT/DE2010/001515
(87) Internationale Veröffentlichungsnummer: WO 2011/076195

(56) Entgegenhaltungen:
- EP-A1- 1 544 459
- WO-A1-2007/118462
- US-A- 1 518 022
- US-A- 2 097 667
- US-A- 4 052 134
- US-A- 4 178 126

## Beschreibung

Die Erfindung betrifft eine Vorrichtung zur Nutzung von Strömungsenergie, insbesondere Windenergie, mit Anströmflächen aufweisenden Elementen, die auf einer Bahn umlaufend und im Abstand zueinander geführt sind, wobei eine Rotationsachse, um die sich die Elemente bewegen, quer zur Strömungsrichtung angeordnet ist, und wobei die Vorrichtung einen parallel zu der Bahn bewegbaren Ring umfasst, mittels dessen unter Übertragung von in Richtung tangential zu der Bahn wirkender Kräfte mit den Elementen aufgenommenen Strömungsenergie auf einen Generator übertragbar ist.

Eine solche Vorrichtung geht aus der US 2,097,667 hervor. Anströmflächen aufweisende Platten sind auf im Abstand voneinander angeordneten Fahrgestellen angebracht, die mit Rädern auf kreisrunden Schienen bewegbar angeordnet sind. Unterhalb der Fahrgestelle ist auf einer parallel zu den Schienen vorgesehenen Tragschiene verschiebbar eine Kette angeordnet. Die Kette ist mit den Fahrgestellen über einen starren Arm verbunden und dazu vorgesehen, mit einem Zahnrad zusammenzuwirken, das einen Generator antreibt.

Bei einem aus der EP 1 544 159 A1 bekannten Windkraftgenerator sind Flügel, die die Anströmflächen aufweisen, und ein mit einer Zahnung versehener Ring, mittels dessen eine Drehbewegung auf einen Generator übertragbar ist, starr mit einer Welle verbunden. Die Welle bildet eine Drehachse, um die herum die Flügel und der Ring drehbar sind.

Aus der US 4,052,134 geht eine Vorrichtung zur Nutzung von Strömungsenergie hervor, deren Elemente auf einem ringförmigen Träger angeordnet sind, an dessen Außenseite ein Zahnring angeordnet ist, der mit einem Zahnrad eines Generators zusammenwirkt.

Aus der WO 2007/118462 A1 ist eine weitere Vorrichtung zur Nutzung von Strömungsenergie bekannt, bei der die Elemente parallel zu einander bewegt werden und nicht in einer Ebene senkrecht zur Strömungsrichtung rotieren. Die Elemente sind auf einer kreisförmigen, als Zahnrad ausgestalteten Halterung befestigt, mit der die aufgenommene Strömungsenergie auf den Generator übertragen wird. Da insbesondere bei hohen Strömungsgeschwindigkeiten und bei großen Vorrichtungen mit einem Zahnraddurchmesser von > 50 m große Kräfte und ggf. starke Schwingungen auftreten, sind an die mechanische Stabilität der Vorrichtungen hohe Anforderungen gestellt. Eine für eine Übertragung der Bewegungsenergie an einen Generator ausreichend genaue Führung der Elemente ist nur unter großem baulichen Aufwand zu erreichen.

Der Erfindung liegt die Aufgabe zugrunde, bei konstruktiv einfachem Aufbau der Vorrichtung eine weniger von Witterungsbedingungen abhängige Nutzung der Strömungsenergie zu ermöglichen.

Die Aufgabe wird dadurch gelöst, dass die Elemente und in der Vorrichtung getrennt voneinander gelagert und Einrichtung derart miteinander verbunden sind, dass zwischen den Elementen und dem Ring in Richtung tangential zu der Bahn wirkende Kräfte übertragen und in anderen Richtungen wirkende Kräfte nicht oder nur abgeschwächt übertragen werden.

Gewichtskräfte der Elemente und durch die Strömung verursachte, auf die Elemente wirkende horizontale Kräfte werden von dem Ring entkoppelt und die ggf. auftretenden Schwingungen in nur geringem Maße auf den Ring übertragen. Die Vorrichtung kann im Vergleich zu den bekannten Vorrichtungen bei noch höheren Strömungsgeschwindigkeiten betrieben werden.

Da über den Ring auf den Generator lediglich die in elektrische Energie umzuwandelnden Kräfte, also die in Rotationsrichtung wirkenden Kräfte, übertragen werden, muss dieser nicht für Belastungen durch andere Kraftkomponenten ausgelegt werden.
Der Ring verbindet die Elemente ferner untereinander. Befindet sich eines der Elemente in einer Position, in der es nicht durch die Strömung angetrieben wird, wird es mittels des Rings von den anderen Elementen mitgezogen.

In einer Ausgestaltung der Erfindung ist der Ring parallel zu der Bahn gelagert.

Zweckmäßigerweise ist die Verbindung lösbar, sodass sich der Ring bei seiner Montage oder einer Reparatur vollständig von den Elementen entkoppeln und wieder an die Elemente ankoppeln lässt. Zweckmäßigerweise ist der Ring mit einem Kopplungselement versehen, das einen Sitz für ein an einer Lagerung der Elemente angeordnetes, die Verbindung bildendes, vorzugsweise klappbares Glied aufweist. In Richtungen senkrecht zur Bewegungsrichtung der Elemente kann das Glied in dem Sitz gleiten.

In einer Ausgestaltung der Erfindung ist der Ring zur Kraftübertragung an ein Zahnrad oder eine Zahnstange eines Getriebes eines Generators oder direkt an einen Generator vorgesehen. Zweckmäßigerweise ist der Ring dazu mit Zähnen versehen oder zur Aufnahme von Zähnen des Zahnrades oder der Zahnstange vorgesehen. Die Einrichtung kann ferner mit in Abstand zueinander angeordneten Blöcken aus ferromagnetischem Material, vorzugsweise Eisen, versehen sein, die mit einem bspw. aus der DE 10 2009 025 289 A1 bekannten Generator zusammenwirken.

In einer Ausgestaltung der Erfindung sind die Elemente und/oder ist der Ring durch, vorzugsweise auf Schienen geführten, Rollen oder auf Wasser gelagert. Zweckmäßigerweise ist die genannte Verbindung zwischen der Lagerung der Elemente und dem Ring gebildet.

Zur Lagerung der Elemente ist eine an einem Gerüst angeordnete Schiene vorgesehen. Das Gerüst nimmt über die Schiene die nicht in der Rotationsrichtung wirkenden Kräfte, insbesondere die Gewichtskräfte, und die horizontal durch den Wind auf die Elemente wirkenden Kräfte, auf.

In einer Weiterbildung der Erfindung ist für jedes Element eine eigene Lagerung, vorzugsweise auf einem mindestens zwei Räder aufweisenden, auf Schienen geführten Fahrgestell, vorgesehen. Vorteilhaft lässt sich die Lagerung im Vergleich zu aus dem Stand der Technik bekannten Vorrichtungen, bei denen alle Elemente gemeinsam auf dem Ring befestigt sind, kompakter herstellen.

In einer Ausführungsform der Erfindung sind die Fahrgestelle miteinander elastisch verbunden. Die Übertragung von Schwingungen zwischen den Fahrgestellen und entsprechend auch zwischen den Elementen kann somit verringert werden.

Während es vorstellbare wäre, die Elemente der Länge nach lediglich etwa an ihrer Mitte zu lagern, sind sie in einer bevorzugten Ausführungsform der Erfindung an ihrer Unterseite und ggf. zusätzlich an ihrer Oberseite und/oder etwa an ihrer Mitte gelagert. Ergänzend oder alternativ können die Elemente auch an anderen Stellen gelagert sein.

Zweckmäßigerweise sind die Elemente, die länger als 15 m, vorzugsweise länger als 25 m, sein können, und/oder der Ring, dessen Kreisbogen eine Länge > 100 m, vorzugsweise eine Länge > 300 m, aufweisen kann, modular aufgebaut. Der Transport von Einzelteilen, insbesondere der Elemente an den Ort, an dem die Vorrichtung zu installieren ist, vereinfacht sich, da keine Sondertransporte für Großteile mehr nötig sind. Auch große Anlagen können mit verhältnismäßig geringem Aufwand an nahezu jeden mit Fahrzeugen erreichbaren Ort transportiert werden.

Zweckmäßigerweise sind die Elemente aus zumindest zwei der Länge nach übereinander angeordneten Elemententeilen gebildet, zwischen denen eine Verbindung derart vorgesehen ist, dass die Elemententeile zum Ausgleich von baulichen Toleranzen oder Wärmeausdehnungen sowohl der Elemententeile als auch der Vorrichtung insgesamt bezogen auf ihre Längsachse um maximal 2 ° gegeneinander verkippbar sind.

Im Folgenden wird die Erfindung anhand von Ausführungsbeispielen und der beiliegenden, sich auf diese Ausführungsbeispiele beziehenden Zeichnungen näher erläutert. Es zeigen in isometrischer Darstellung
- Fig. 1: eine erfindungsgemäße Vorrichtung,
- Fig. 2: eine Einzelheit der Vorrichtung nach Fig. 1,
- Fig. 3: eine weitere Einzelheit der Vorrichtung nach Fig. 1,
- Fig. 4: die Einzelheit nach Fig. 3 in einer anderen Ansicht,
- Fig. 5: eine weitere Einzelheit der Vorrichtung nach Fig. 1,
- Fig. 6: eine weitere Einzelheit der Vorrichtung nach Fig. 1,
- Fig. 7: eine weitere Einzelheit der Vorrichtung nach Fig. 1,
- Fig. 8: eine Einzelheit einer anderen erfindungsgemäßen Vorrichtung,
- Fig. 9: eine Einzelheit einer weiteren erfindungsgemäßen Vorrichtung,
- Fig. 10: eine Ausführungsform eines Teils einer erfindungsgemäßen Vorrichtung,
- Fig. 11: eine andere Ausführungsform des Teils nach Fig. 10,
- Fig. 12: Einzelheiten eines Teils der erfindungsgemäßen Vorrichtung,
- Fig. 13: eine weitere erfindungsgemäße Vorrichtung, und
- Fig. 14: eine weitere erfindungsgemäße Vorrichtung.

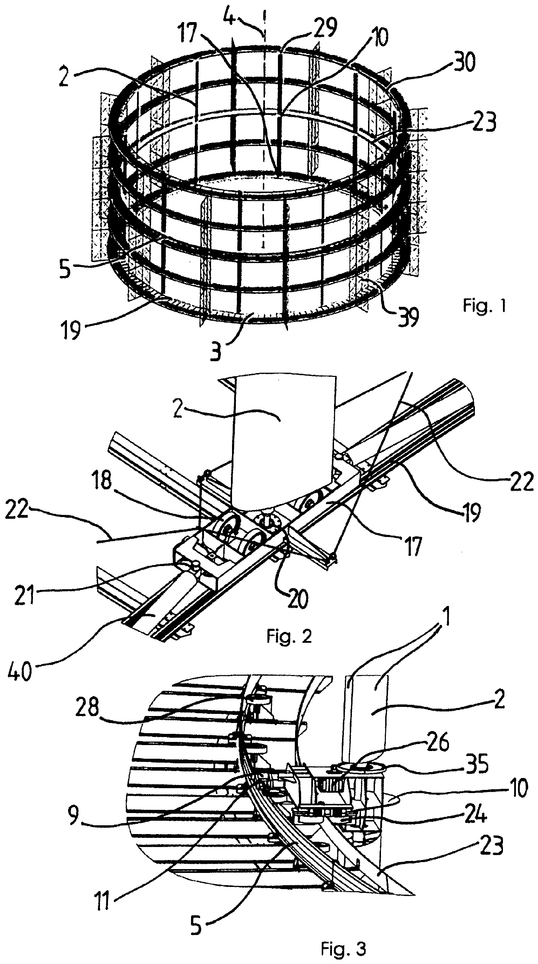

Eine erfindungsgemäße Vorrichtung gemäß Fig. 1 weist zehn Elemente 2 mit Anströmflächen 1 zur Aufnahme von Windenergie auf, die an kreisförmigen, parallel versetzt übereinander angeordneten Schienen 19,23,30 entlang einer Bahn 3 um eine durch eine gestrichelte Linie gezeigte Achse 4 rotierbar gelagert sind. Die Vorrichtung ist mit einem Gerüst 39 versehen, das von den Elementen 2 auf die Schienen 19,23,30 übertragene Kräfte aufnimmt.
Die insgesamt 50 m langen Elemente 2 sind modular aus vier 12,5 m langen der Länge nach übereinandergesetzten Teilen aufgebaut.

Wie in Fig. 2 gezeigt, sind die Elemente 2 an der Unterseite der Vorrichtung in einem auf den Schienen 19 angeordneten Fahrgestell 17, das das Gewicht der Elemente 2 trägt, in einem Kugelkopflager 20 drehbar gelagert. Das Fahrgestell 17 weist vier Rollen 18 auf, von denen zwei auf jeweils einer der beiden Schienen 19 laufen. An dem Fahrgestell 17 sind ferner Seile 22 befestigt, die mit einer mittleren oder oberen Lagerung der Elemente 2 verbunden sind (hier nicht gezeigt).

An Gelenken 21 des Fahrgestells 17 sind Stangen 40 befestigt, die eine gewisse Elastizität aufweisen und eine horizontale Verbindung zu benachbarten Fahrgestellen 17 bilden.

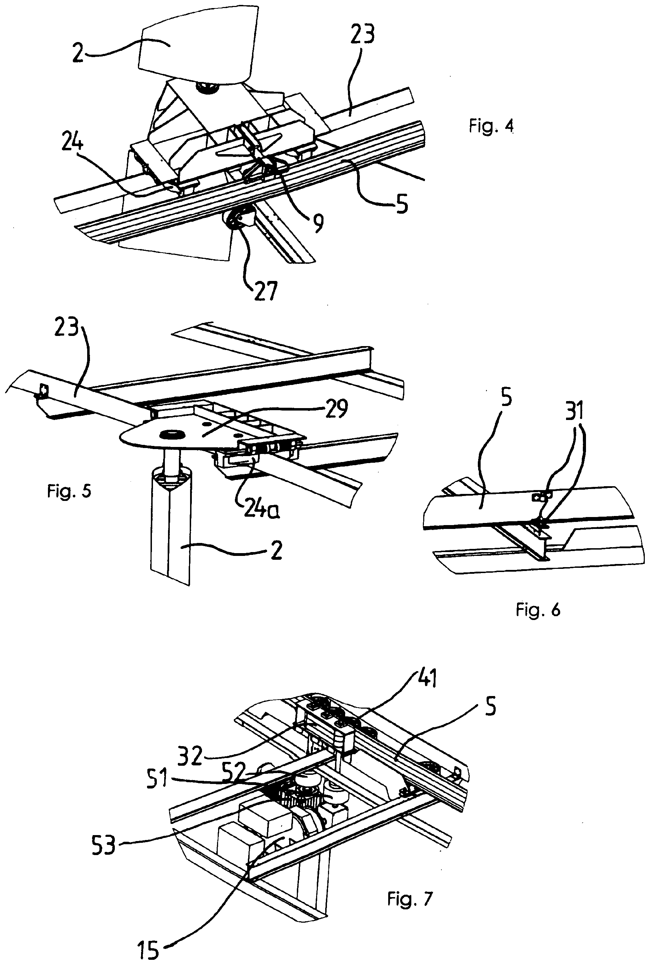

In Fig. 3 ist gezeigt, wie die Elemente 2 an ihrer Mitte gelagert sind. Zur Führung der Elemente 2 ist eine Schiene 23 vorgesehen, die zur horizontalen Abstützung der Elemente 2 mit an einer Halterung 10 befestigten Rollen 24 dient. Die Halterung 10 ist über ein Verbindungsglied 9 mit einem parallel zur Schiene 23 bewegbaren Ring 5 verbunden, der auf seiner Außenseite mit hier nicht gezeigten Zähnen versehen und zur Übertragung der durch Wind verursachten Rotationsbewegung der Elemente 2 auf einen Generator 15 vorgesehen ist. Der Ring 5 ist horizontal durch Rollen 28 und wie insbesondere aus Fig. 4 hervorgeht, vertikal durch Rollen 27 geführt.
Der Ring 5 ist aus einem Aluminiumblech gebildet, auf dem ein Zahnriemen angeordnet ist.

Das in Fig. 4 genauer erkennbare Verbindungsglied 9 greift in einen in einem auf dem Ring 5 sitzenden Kopplungselement 11 vorgesehenen Sitz ein, in dem das Kopplungselement 11 in radialer Richtung gleiten kann, in Bewegungsrichtung der Elemente auftretende Kräfte aber überträgt. Die Elemente 2 können von dem Ring 5 entkoppelt werden, indem das Verbindungsglied 9 aus dem Kopplungselement 11 geklappt wird.

Fig. 5 zeigt die obere Lagerung 29 der Elemente 2, die im Wesentlichen in gleicher Weise wie die mittlere Lagerung mit Rollen 24a an der Schiene 30 eine Stütze in horizontaler Richtung bildet.

Wie insbesondere aus Fig. 6 hervorgeht, ist der Ring 5 aus mehreren einzelnen, durch an Gelenken 31 miteinander verbindbaren Teilstücken gebildet.

In Fig. 7 ist gezeigt, wie mittels des Rings 5 die mit den Elementen 2 erzeugte Bewegung auf einen Generator 15 übertragen wird. Der Ring 5 wird durch Rollen 41 gegen ein um zwei Zylinder geführten, umlaufende Riemen 32 gedrückt, der auf seiner Außenseite mit in die Zähne des Rings 5 eingreifenden, hier nicht gezeigten Zähnen versehen ist. Die Bewegung eines der so in Drehung versetzten Zylinder wird über eine Welle an einen Generator 15 übertragen. An der unteren Seite der Welle ist eine Kupplung 51 vorgesehen, die eine Stellung hat, in der das Drehmoment der Welle auf den Generator 15 übertragen wird, und eine andere Stellung aufweist, in der keine Kraft übertragen wird.
Mit dem anderen Zylinder ist der Riemen 32 über eine weitere Welle und eine Kupplung 52 mit einem Motor 53 verbunden, mit dem sich der Ring 5 antreiben lässt und so der Ring und die Elemente, z.B. für Reparaturarbeiten, in eine bestimmte Position bringen lassen.
Bei Betrieb der Vorrichtung wird der Motor 53 entkoppelt und die Bewegung des Rings über die Kupplung 51 an den Generator übertragen. Analog wird zum Bewegen des Rings mit dem Motor 53 die Kupplung 51 derart eingestellt, dass keine Kraft übertragen wird.

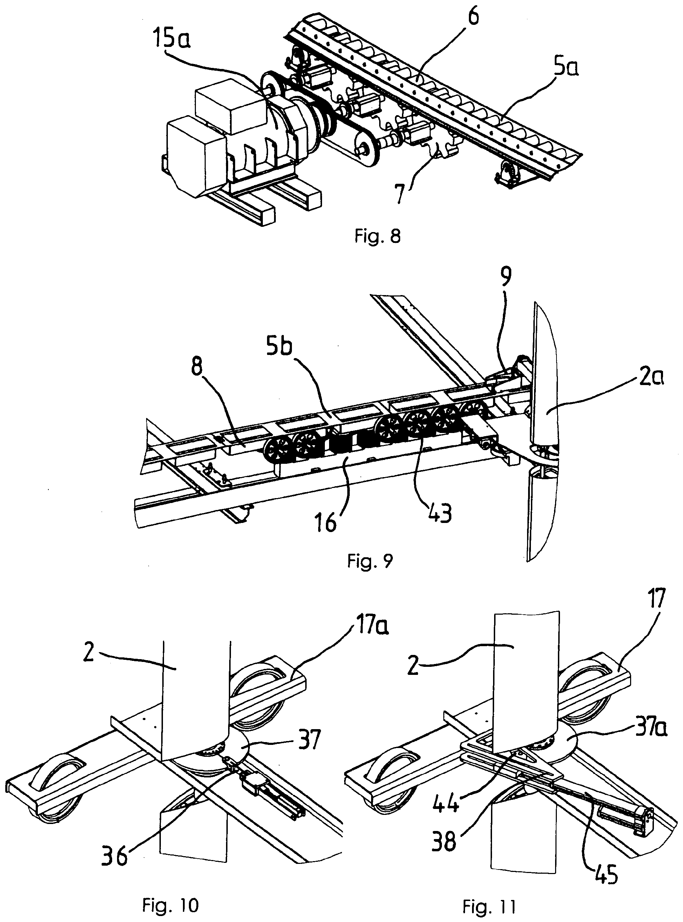

Es wird nun auf die Fig. 8 bis 13 Bezug genommen, wo gleiche oder gleichwirkende Teile mit derselben Bezugszahl wie in den Fig. 1 bis 7 bezeichnet sind und der betreffenden Bezugszahl jeweils ein Buchstabe beigefügt ist.

In dem in Fig. 8 gezeigten Ausführungsbeispiel ist zur Übertragung der Bewegungsenergie der Elemente 2a ein Ring 5a als Kette eines Kettengetriebes ausgestaltet. Er ist mit mehreren, im Abstand zueinander angeordneten Gliedern 6 versehen, die mit Zahnrädern 7 zusammenwirken. Bei Bewegung des Rings 5a werden die Zahnräder 7 gedreht und treiben einen Generator 15a an.

Bei dem Ausführungsbeispiel nach Fig. 9 sind auf einem Ring 5b zur Übertragung der Bewegungsenergie im Abstand voneinander Eisenblöcke 8 angeordnet, die über einen aus der DE 10 2009 025 298 A1 bekannten Generator 16 geführt werden. Werden die Eisenblöcke 8 über Spulen des Generators 16 bewegt, wird aufgrund der sich zeitlich ändernden Permeabilität des Raumes an der Spule eine Spannung induziert.

Es wird nun auf die Figuren 3, 10 und 11 Bezug genommen, in denen verschiedene Einrichtungen zur Ausrichtung der Elemente 2 dargestellt sind. Die Einrichtung nach Fig. 3 weist ein Zahnrad 35 auf, das in ein mit einem Elektromotor 26 verbundenes weiteres Zahnrad eingreift. Durch Drehen des mit dem Elektromotor verbundenen Zahnrades kann das Element 2 um seine Längsachse gedreht werden.

Bei dem in Fig. 10 gezeigten Ausführungsbeispiel sind die Elemente 2 mit einem Teller 37 verbunden, der eine seitliche Ausnehmung aufweist, in der eine Halterung befestigt ist. Die Halterung ist mit einem Seil oder einer Blattfeder 36 versehen. Mittels eines Elektromotors lässt sich der mögliche Bewegungsradius des Tellers 37 einstellen und somit ein möglicher Schwenkradius der Elemente 2 verstellen. Je nach auf die Elemente 2 wirkender Windrichtung können die Elemente in Stellungen links bzw. rechts von der Halterung 36 klappen.

Mittels in einer in Fig. 11 gezeigten Steuereinrichtung 38 lässt sich eine Position der Elemente 2 exakt steuern. Eine in eine Ausnehmung in einem Teller 37a eingreifende Nase 44 ist entlang einer Stange 45 verschiebbar gelagert. Durch Verschieben der Nase 44 auf der Stange 45 wird der Teller 37a und mit ihm die Elemente 2 gedreht.

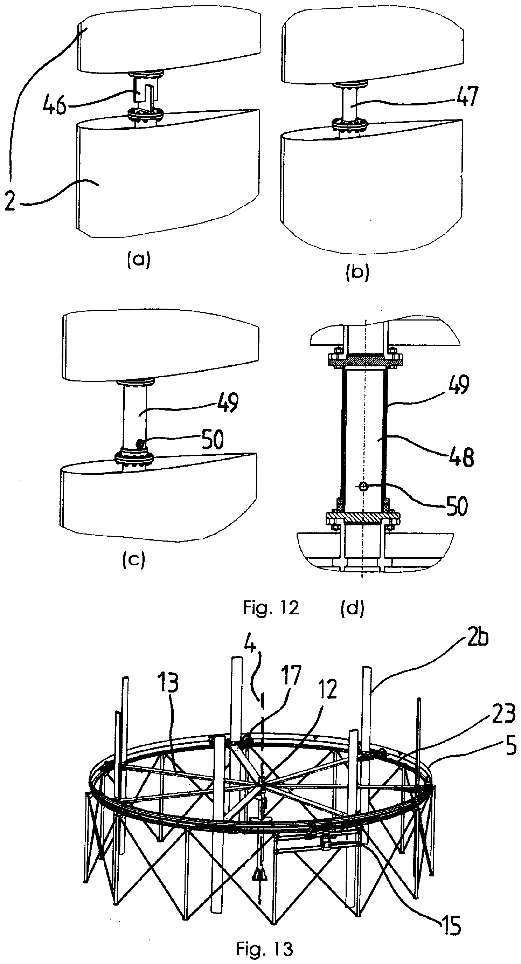

Fig. 12 zeigt Verbindungen von Teilen der modular aufgebauten Elemente 2 untereinander, die eine Verkippung der Elemente gegeneinander um maximal 1 ° zulassen. Bei dem Beispiel nach Fig. 12a greifen zwei mit Schlitzen versehene Blechstücke 46 ineinander. Fig. 11b zeigt eine Stange 47 aus einem elastisch verformbaren Kunststoff.
Wie insbesondere aus Fig. 12c und 12d hervorgeht, können die Elemente 2 auch durch zwei in einander steckbare Rohre 48 und 49 miteinander verbunden werden. Sie sind durch eine vom inneren Rohr 48 in eine Ausnehmung in dem äußeren Rohr 49 vorstehende Nase 50 gegen Verdrehung und Verrutschen in axiale Richtung gegeneinander gesichert.

Bei Betrieb der Vorrichtung werden die Elemente 2 durch Einwirkung von Wind in Bewegung gesetzt und laufen entlang der Schienen 19,23 und 30 auf einer Kreisbahn.
Die Ausrichtung der Elemente 2 im Verhältnis zur Windrichtung und in Abhängigkeit von ihrer jeweiligen Position lässt sich mit Hilfe der Steuereinrichtungen 35,36 oder 38 einstellen. Die Ausrichtung lässt sich dazu mit einem Computerprogramm in Abhängigkeit von der Windrichtung und der Windstärke steuern.

Bei ihrer Bewegung entlang den Schienen 19,23 und 30 nehmen die Elemente 2 den Ring 5 mit. Sie sind dazu mit dem Ring 5 jeweils über das Verbindungsglied 9 verbunden, das lediglich Kräfte in zum Ring 5 tangentialer Richtung überträgt und ansonsten, insbesondere in radialer und vertikaler Richtung mit vernachlässigbar geringer Kraftübertragung in dem Kopplungselement 10 verschiebbar ist. Es werden also nur Kräfte in der Rotationsrichtung der Elemente 2 auf den Ring 5 übertragen. Die beim Betrieb der Vorrichtung auftretende, insbesondere auch durch Schwingungen verursachte, Kräfte, die nicht in der Rotationsrichtung wirken, werden von den Schienen 19,23 und 30 bzw. dem Traggerüst, an dem die Schienen 19,23 und 30 befestigt sind, aufgenommen, an den Ring 5 nicht oder nur in geringem Maße übertragen.
Die Bewegung des Ringes 5 wird mittels der Zahnräder gemäß der Figuren 7 oder 8 an die Generatoren 15,15a übertragen und dort in elektrische Energie umgewandelt oder mittels der Eisenblöcke 8 über die Generatoren 16 geführt und dort, wie es aus der DE 10 2009 025 298 A1 bekannt ist, elektrische Spannung induziert.

Wie insbesondere aus Fig. 13 hervorgeht, können die Elemente 2 auch lediglich ihrer Länge nach in der Mitte auf Fahrgestellen 17 gelagert sein. Die Fahrgestelle 17 sind durch radial ausgerichtete Stangen 13 an einem in einer Rotationsachse der Drehbewegung der Elemente 2 angeordneten Pfahl 12 drehbar gelagert. Die Übertragung an einen Generator 15a erfolgt gemäß dem in Fig. 8 gezeigten Ausführungsbeispiel. Alternativ könnte die Bewegung der Elemente 2 mittels eines an dem Pfahl 12 angeordneten Generators, an den die Bewegung der Elemente 2 über die Stangen 13 übertragen wird, abgenommen werden.

In einem weiteren, hier nicht gezeigten Ausführungsbeispiel, könnte eine Schiene 23a, im Vergleich zu dem Ausführungsbeispiel aus Fig. 12 auch radial weiter nach innen, insbesondere an einen Schwerpunkt der Elemente 2 und der Stangen 13 versetzt sein.

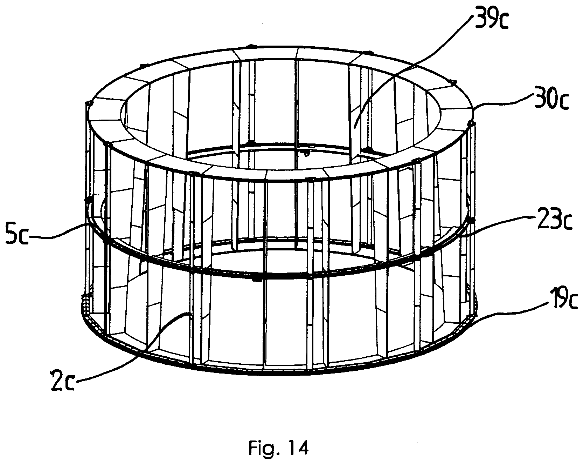

Fig. 14 zeigt eine weitere erfindungsgemäße Vorrichtung, bei der Elemente 2c sowie Schienen 19a,23a und 30a und ein Ring 5c auf einer Außenseite eines Gerüsts 39c angeordnet sind. Bei dieser Anordnung ist das Gerüst 39c auf der dem Wind zugewandten Seite der Vorrichtung in Windrichtung gesehen nicht vor den Elementen 2c angeordnet. Verwirbelungen des Windes vorm Auftreffen auf die Elemente 2c werden somit unterbunden.

Es ist ferner vorstellbar, mehrere der in Fig. 1,13 und 14 gezeigten und der beschriebenen Vorrichtungen übereinander anzuordnen. Auf diese Weise wird ein Turm mit mehreren Gruppen von rotierenden Elementen, Einrichtungen und entsprechenden Lagerungen gebildet, von denen der erzeugte Strom getrennt abgenommen werden kann.

## Patentansprüche

1. Vorrichtung zur Nutzung von Strömungsenergie, insbesondere Windenergie, mit Anströmflächen (1) aufweisenden Elementen (2,2a,2b), die auf einer Bahn (3) umlaufend und im Abstand zueinander geführt sind, wobei eine Rotationsachse (4), um die sich die Elemente (2,2a,2b) bewegen, quer zur Strömungsrichtung angeordnet ist und die Vorrichtung einen parallel zu der Bahn bewegbaren Ring (5,5a,5b,5c) umfasst, mittels dessen unter Übertragung von in Richtung tangential zu der Bahn (3) wirkender Kräfte mit den Elementen (2,2a,2b) aufgenommene Strömungsenergie auf einen Generator (15,15a,16) übertragbar ist,
**dadurch gekennzeichnet,**
**dass** die Elemente (2,2a,2b,2c) und der Ring (5,5a,5b,5c) in der Vorrichtung getrennt voneinander gelagert und derart miteinander verbunden sind, dass zwischen den Elementen (2,2a,2b,2c) und dem Ring (5,5a,5b,5c) in Richtung tangential zu der Bahn (3) wirkende Kräfte übertragen und in anderen Richtungen als in Richtung tangential zu der Bahn (3) wirkende Kräfte nicht oder nur abgeschwächt übertragen werden.

2. Vorrichtung nach Anspruch 1,
**dadurch gekennzeichnet,**
**dass** der Ring (5,5a,5b,5c) parallel zu der Bahn (3) gelagert ist.

3. Vorrichtung nach Anspruch 1 oder 2,
**dadurch gekennzeichnet,**
**dass** der Ring (5,5a,5b,5c) mit in Abstand zueinander angeordneten Blöcken aus ferromagnetischem Material versehen oder zur mechanischen Übertragung von Kräften vorgesehen ist und vorzugsweise zum Zusammenwirken mit einem Zahnrad (7) oder einer Zahnstange mit Zähnen versehen ist.

4. Vorrichtung nach einem der Ansprüche 1 bis 3,
**dadurch gekennzeichnet,**
**dass** die Elemente (2,2a,2b,2c) und/oder der Ring (5,5a,5b,5c) auf Rollen (8) oder auf Wasser gelagert sind bzw. ist.

5. Vorrichtung nach einem der Ansprüche 1 bis 4,
**dadurch gekennzeichnet,**
**dass** zur Lagerung der Elemente (2,2a,2b,2c) eine an einem Gerüst (39,39a) angeordnete Schiene (19,23,30) vorgesehen ist.

6. Vorrichtung nach einem der Ansprüche 1 bis 5,
**dadurch gekennzeichnet,**
**dass** für jedes Element (2,2a,2b,2c) eine eigene Lagerung, vorzugsweise ein mindestens zwei Räder aufweisendes Fahrgestell (17,17a,17b), vorgesehen ist.

7. Vorrichtung nach einem der Ansprüche 2 bis 6,
**dadurch gekennzeichnet,**
**dass** die Verbindung (9) zwischen der Lagerung (10) der Elemente (2,2a,2b,2c) und den Ring (5,5a,5b,5c) gebildet ist.

8. Vorrichtung nach einem der Ansprüche 1 bis 7,
**dadurch gekennzeichnet,**
**dass** die Elemente (2,2a,2b,2c) untereinander elastisch verbunden sind.

9. Vorrichtung nach einem der Ansprüche 1 bis 8,
**dadurch gekennzeichnet,**
**dass** die Elemente (2,2a,2b) und/oder der Ring (5,5a,5b,5c) modular aufgebaut sind.

10. Vorrichtung nach einem der Ansprüche 1 bis 9,
**dadurch gekennzeichnet,**
**dass** die Elemente (2,2a,2b,2c) durch zumindest zwei der Länge nach übereinander angeordnete Elemententeile gebildet ist, zwischen denen eine Verbindung (46;47;48;49,50) derart vorgesehen ist, dass die Elemententeile, vorzugsweise um maximal 2°, bezüglich ihrer Längsachsen verkippbar sind.

## Claims

1. Device for using flow energy, in particular wind energy, with elements (2, 2a, 2b) which have incident-flow surfaces (1) and which are guided at a distance from one another so as to run around on a track (3), wherein an axis of rotation (4) about which the elements (2, 2a, 2b) move is arranged transversely with respect to the flow direction, and the device comprises a ring (5, 5a, 5b, 5c) which is movable parallel to the track and by means of which, with the transmission of forces acting in a direction tangential to the track (3), flow energy captured using the elements (2, 2a, 2b) can be transmitted to a generator (15, 15a, 16),
**characterized in that**
the elements (2, 2a, 2b, 2c) and the ring (5, 5a, 5b, 5c) are mounted separately from one another in the device and connected to one another in such a way that forces acting between the elements (2, 2a, 2b, 2c) and the ring (5, 5a, 5b, 5c) in a direction tangential to the track (3) are transmitted and forces acting in other directions than in a direction tangential to the track (3) are not transmitted or are transmitted only to an attenuated extent.

2. Device according to Claim 1,
**characterized in that**
the ring (5, 5a, 5b, 5c) is mounted parallel to the track (3).

3. Device according to Claim 1 or 2, **characterized in that**
the ring (5, 5a, 5b, 5c) is provided with spaced-apart blocks of ferromagnetic material or is provided for the mechanical transmission of forces and is preferably provided for interacting with a toothed wheel (7) or a rack with teeth.

4. Device according to one of Claims 1 to 3, **characterized in that**
the elements (2, 2a, 2b, 2c) and/or the ring (5, 5a, 5b, 5c) are or is mounted on rollers (8) or on water.

5. Device according to one of Claims 1 to 4, **characterized in that**
a rail (19, 23, 30) arranged on a framework (39, 39a) is provided in order to mount the elements (2, 2a, 2b, 2c).

6. Device according to one of Claims 1 to 5, **characterized in that**
a dedicated mounting, preferably a chassis (17, 17a, 17b) having at least two wheels, is provided for each element (2, 2a, 2b, 2c).

7. Device according to one of Claims 2 to 6, **characterized in that**
the connection (9) is formed between the mounting (10) for the elements (2, 2a, 2b, 2c) and the ring (5, 5a, 5b, 5c).

8. Device according to one of Claims 1 to 7, **characterized in that**
the elements (2, 2a, 2b, 2c) are elastically interconnected.

9. Device according to one of Claims 1 to 8, **characterized in that**
the elements (2, 2a, 2b) and/or the ring (5, 5a, 5b, 5c) have or has a modular design.

10. Device according to one of Claims 1 to 9, **characterized in that**
the elements (2, 2a, 2b, 2c) is formed by at least two element parts which are arranged above one another lengthwise and between which a connection (46; 47; 48; 49, 50) is provided in such a way that the element parts can be tilted with respect to their longitudinal axes, preferably through at most 2°.

## Revendications

1. Dispositif pour l'exploitation de l'énergie de flux, en particulier de l'énergie éolienne, présentant des éléments (2,2a,2b), pourvus de surfaces d'alimentation (1), qui sont guidés sur une voie (3) périphérique et à une certaine distance les uns des autres, un axe de rotation (4) autour duquel les éléments (2,2a,2b) se déplacent étant disposé transversalement par rapport au sens du flux et le dispositif comprenant une bague (5,5a,5b,5c), pouvant être déplacée parallèlement à la voie, au moyen de laquelle l'énergie de flux, absorbée par les éléments (2,2a,2b) avec transmission de forces agissant dans la direction tangentielle par rapport à la voie (3), peut être transmise à un générateur (15,15a,16), **caractérisé en ce que** les éléments (2,2a,2b,2c) et la bague (5,5a,5b,5c) sont logés dans le dispositif séparément les uns des autres et sont reliés l'un à l'autre de manière telle que des forces agissant dans la direction tangentielle par rapport à la voie (3) entre les éléments (2,2a,2b,2c) et la bague (5,5a,5b,5c) sont transmises et des forces agissant dans des directions autres que la direction tangentielle à la voie (3) ne sont pas transmises ou seulement de manière affaiblie.

2. Dispositif selon la revendication 1, **caractérisé en ce que** la bague (5,5a,5b,5c) est logée parallèlement à la voie (3).

3. Dispositif selon la revendication 1 ou 2, **caractérisé en ce que** la bague (5,5a,5b,5c) est pourvue de blocs en matériau ferromagnétique disposés à une certaine distance les uns des autres ou prévue pour la transmission mécanique de forces et de préférence pourvue d'une roue dentée (7) ou d'une crémaillère présentant des dents pour l'interaction.

4. Dispositif selon l'une quelconque des revendications 1 à 3, **caractérisé en ce que** les éléments (2,2a,2b,2c) et/ou la bague (5,5a,5b,5c) est/sont logé(e)(s) sur des rouleaux (8) ou sur de l'eau.

5. Dispositif selon l'une quelconque des revendications 1 à 4, **caractérisé en ce qu'**un rail (19,23,30) disposé sur une structure (39,39a) est prévu pour le logement des éléments (2,2a,2b,2c).

6. Dispositif selon l'une quelconque des revendications 1 à 5, **caractérisé en ce que**, pour chaque élément (2,2a,2b,2c), un logement propre, de préférence un châssis (17,17a,17b) présentant au moins deux roues, est prévu.

7. Dispositif selon l'une quelconque des revendications 2 à 6, **caractérisé en ce que** la liaison (9) est formée entre le logement (10) des éléments (2,2a,2b,2c) et la bague (5,5a,5b,5c).

8. Dispositif selon l'une quelconque des revendications 1 ou 7, **caractérisé en ce que** les éléments (2,2a,2b,2c) sont reliés élastiquement les uns aux autres.

9. Dispositif selon l'une quelconque des revendications 1 à 8, **caractérisé en ce que** les éléments (2,2a,2b,2c) et/ou la bague (5,5a,5b,5c) présentent une construction modulaire.

10. Dispositif selon l'une quelconque des revendications 1 à 9, **caractérisé en ce que** les éléments (2,2a,2b,2c) sont formés par au moins deux parties d'élément disposées l'une au-dessus de l'autre dans la longueur, entre lesquelles existe une liaison (46;47;48;49,50) de manière telle que les parties d'élément peuvent être basculées, de préférence d'au maximum 2°, par rapport à leurs axes longitudinaux.
